# EUROPÄISCHE PATENTSCHRIFT

(11) **EP 3 802 247 B1**
(45) Veröffentlichungstag und Bekanntmachung des Hinweises auf die Patenterteilung: **11.09.2024**
(21) Anmeldenummer: 19725101.0
(22) Anmeldetag: 15.05.2019
(51) Int. Cl.: B60T 8/40, B60T 13/74, B60T 8/88, B60T 7/04

(54) **BREMSSYSTEM MIT ZWEI DRUCKQUELLEN UND VERFAHREN ZUM BETREIBEN EINES BREMSSYSTEMS MIT ZWEI DRUCKQUELLEN**
BRAKING SYSTEM WITH TWO PRESSURE SOURCES, AND METHOD FOR OPERATING A BRAKING SYSTEM WITH TWO PRESSURE SOURCES
SYSTÈME DE FREINAGE MUNI DE DEUX SOURCES DE PRESSION ET PROCÉDÉ PERMETTANT DE FAIRE FONCTIONNER UN SYSTÈME DE FREINAGE MUNI DE DEUX SOURCES DE PRESSION

(30) Priorität: 24.05.2018 DE 102018208223
(43) Veröffentlichungstag der Anmeldung: 14.04.2021
(73) Patentinhaber: Continental Automotive Technologies GmbH, 30175 Hannover (DE)
(72) Erfinder: BESIER, Marco, 60488 Frankfurt am Main (DE); DRUMM, Stefan, 60488 Frankfurt am Main (DE)
(74) Vertreter: Continental Corporation
(86) Internationale Anmeldenummer: PCT/EP2019/062509
(87) Internationale Veröffentlichungsnummer: WO 2019/224077

(56) Entgegenhaltungen:
- DE-A1- 102011 122 776
- DE-A1- 102012 210 809
- DE-A1- 102013 225 809
- DE-A1- 102014 225 958
- DE-A1- 102016 203 563
- DE-A1- 19 717 686

## Beschreibung

Die Erfindung betrifft ein Bremssystem gemäß dem Oberbegriff des Anspruchs 1. Sie betrifft weiterhin ein Verfahren zum Betrieb eines solchen Bremssystems.

Bei elektrohydraulischen Bremssystemen mit der Betriebsart "Brake-by-Wire" ist der Fahrer von dem direkten Zugriff auf die Bremsen entkoppelt. Bei Betätigung des Pedals werden gewöhnlich eine Pedalentkopplungseinheit und ein Simulator betätigt, wobei durch eine Sensorik der Bremswunsch des Fahrers erfasst wird. Der Pedalsimulator dient dazu, dem Fahrer ein möglichst vertrautes Bremspedalgefühl zu vermitteln. Der erfasste Bremswunsch führt zu der Bestimmung eines Sollbremsmomentes, woraus dann der Sollbremsdruck für die Bremsen ermittelt wird. Der Bremsdruck wird dann aktiv von einer Druckbereitstellungseinrichtung in den Bremsen aufgebaut.

Das tatsächliche Bremsen erfolgt also durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. für den Fahrer komfortabel verwirklichen.

Die Druckbereitstellungseinrichtung in oben beschriebenen Bremssystemen wird auch als Aktuator bzw. hydraulischer Aktuator bezeichnet. Insbesondere werden Aktuatoren als Linearaktuatoren ausgebildet, bei denen zum Druckaufbau ein Kolben axial in einen hydraulischen Druckraum verschoben wird, der in Reihe mit einem Rotations-Translationsgetriebe gebaut ist. Die Motorwelle eines Elektromotors wird durch das Rotations-Translationsgetriebe in eine axiale Verschiebung des Kolbens umgewandelt.

Aus der DE 10 2013 204 778 A1 ist eine "Brake-by-Wire"-Bremsanlage für Kraftfahrzeuge bekannt, welche einen bremspedalbetätigbaren Tandemhauptbremszylinder, dessen Druckräume jeweils über ein elektrisch betätigbares Trennventil trennbar mit einem Bremskreis mit zwei Radbremsen verbunden sind, eine mit dem Hauptbremszylinder hydraulisch verbundene, zu- und abschaltbare Simulationseinrichtung, und eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, umfasst, wobei die Druckbereitstellungseinrichtung über zwei elektrisch betätigbare Zuschaltventile mit den Einlassventilen der Radbremsen verbunden ist.

In derartigen Bremssystemen ist gewöhnlich eine mechanische bzw. hydraulische Rückfallebene vorgesehen, durch die der Fahrer durch Muskelkraft bei Betätigung des Bremspedals das Fahrzeug abbremsen bzw. zum Stehen bringen kann, wenn die "By-Wire"-Betriebsart ausfällt oder gestört ist. Während im Normalbetrieb durch eine Pedalentkopplungseinheit die oben beschriebene hydraulische Entkopplung zwischen Bremspedalbetätigung und Bremsdruckaufbau erfolgt, wird in der Rückfallebene diese Entkopplung aufgehoben, so dass der Fahrer direkt Bremsmittel in die Bremskreise verschieben kann. In die Rückfallebene wird geschaltet, wenn mit Hilfe der Druckbereitstellungseinrichtung kein Druckaufbau mehr möglich ist.

Im Normalbetrieb betätigt bei einer derartigen Fremdkraftbremsanlage der Fahrer einen Pedalsimulator, wobei diese Pedalbetätigung durch Pedalsensoren erfasst wird und ein entsprechender Drucksollwert für den Linearaktuator zu Betätigung der Radbremsen ermittelt wird. Eine Bewegung des Linearaktuators aus seiner Ruhelage nach vorn in den Druckraum hinein verschiebt Bremsflüssigkeitsvolumen vom Linearaktuator über die geöffneten Ventile in die Radbremsen und bewirkt somit einen Druckaufbau. Im umgekehrten Fall führt die Bewegung des Linearaktuators zurück in Richtung seiner Ruhelage zu einem Druckabbau in den Radbremsen.

Die Einstellung eines geforderten Systemdruckes erfolgt mit Hilfe eines geeigneten Druckreglers bzw. eines geeigneten Druckregelsystems, bei dem beispielsweise dem Druckregler ein Drehzahlregler unterlagert ist.

Es sind auch By-Wire-Bremsanlagen bekannt, bei denen zwei Druckbereitstellungseinrichtungen vorhanden sind.

Aus der DE 10 2012 210 809 A1 ist eine Bremsanlage mit einem elektrisch betätigbaren Linearaktuator und einer elektrisch betätigbaren zweikreisigen Pumpe bekannt, wobei der Linearaktuator wie auch die Pumpe mit den zwei Bremskreisabschnitten mit jeweils zwei Radbremsen verbunden ist. Bei einem Druckaufbau mittels der zweikreisigen Pumpe werden stets beide Bremskreisabschnitte mit dem Druck der Pumpe beaufschlagt.

In der DE 10 2011 122 776 A1 wird eine Bremsanlage mit zwei parallel geschalteten elektrohydraulischen Druckbereitstellungseinrichtungen beschrieben. Jede der Druckbereitstellungseinrichtungen ist sowohl mit einem ersten Bremskreisabschnitt als auch mit einem zweiten Bremskreisabschnitt verbunden, die jeweils zwei der Radbremsen mit hydraulischem Bremsdruck versorgt. Mittels eines Umschaltventils werden entweder dem ersten Bremskreisabschnitt die Radbremsen einer der Diagonalen und dem zweiten Bremskreisabschnitt die Radbremsen der anderen Diagonale zugeordnet oder es werden dem ersten Bremskreisabschnitt die Radbremsen der Vorderachse und dem zweiten Bremskreisabschnitt die Radbremsen der Hinterachse zugeordnet. Weiterhin sind jeder Druckbereitstellungseinrichtung zwei Druckerzeugersteuerventile zugeordnet, von denen das eine Druckerzeugersteuerventil die Kopplung der jeweiligen Druckbereitstellungseinrichtung mit dem ersten Bremskreisabschnitt steuert, während das andere Druckerzeugersteuerventil die Kopplung der jeweiligen Druckbereitstellungseinrichtung mit dem zweiten Bremskreisabschnitt steuert. Beispielsweise kann jeweils eine Druckbereitstellungseinrichtung in einem Bremskreisabschnitt Druck aufbauen.

In der DE 10 2016 203 563 A1 wird eine Bremsanlage mit zwei Druckbereitstellungeinrichtungen beschrieben, welche je Radbremse ein stromlos offenes Radventil umfasst, wobei die einzelnen Radventile zum Multiplexen geöffnet und geschlossen werden, um radindividuell den gewünschten Radbremsdruck einzustellen. Die erste Druckbereitstellungseinrichtung ist hydraulisch über eine Radbremsleitung mit einer einem ersten Bremskreis zugeordneten ersten Radbremse verbunden und über eine Radbremsleitung hydraulisch mit einer dem ersten Bremskreis zugeordneten zweiten Radbremse verbunden, und die zweite Druckbereitstellungseinrichtung ist hydraulisch über eine Radbremsleitung mit einer einem zweiten Bremskreis zugeordneten dritten Radbremse verbunden und hydraulisch über eine Radbremsleitung mit einer dem zweiten Bremskreis zugeordneten vierten Radbremse verbunden. Jede der Radbremsleitungen ist über genau ein von zwei Steuer- und Regeleinheiten schaltbares, stromlos offenes Trennventil mit genau einer Radbremsleitung des anderen Bremskreises verbunden.

Der Erfindung liegt die Aufgabe zugrunde, eine alternative Bremsanlage mit zwei Druckbereitstellungseinrichtungen anzugeben, die hohen Anforderungen an Ausfallsicherheit genügt. Weiterhin soll ein entsprechendes Betriebsverfahren angegeben werden.

In Bezug auf das Bremssystem wird diese Aufgabe erfindungsgemäß durch ein Bremssystem gemäß Anspruch 1 gelöst.

Vorteilhafte Ausgestaltungen der Erfindung sind Gegenstand der Unteransprüche.

Die Erfindung geht von der Überlegung aus, dass die zuverlässige Bereitstellung einer aktiven Bremsfunktion eine extrem wichtige Anforderung bei By-Wire-Bremssystemen ist. Insbesondere bei Bremssystemen, die für automatisierte Fahrfunktionen vorgesehen bzw. optimiert sind, ist die lückenlose Bereitstellung der aktiven Bremsfunktion notwendig. Dies betrifft im Besonderen Bremssysteme, die über kein Bremspedal verfügen.

Wie nunmehr erkannt wurde, kann diese Anforderung erfüllt werden, indem einerseits die elektrische und die hydraulische Unabhängigkeit der zwei Bremskreisen konsequent realisiert wird und andererseits eine Übernahme der hydraulischen Komponenten beider Bremskreise durch die noch funktionierenden Bestandteile ermöglicht wird. Auf diese Weise kann das Bremssystem immer noch die Funktionalität eines Bremssystems mit einem Drucksteller ausführen. Über die Datenschnittstelle kann jede der beiden Steuer- und Regeleinheiten jeweils den Zustand der anderen Einheit ermitteln und bei Ausfall entsprechend reagieren und die Versorgung des ausgefallenen Bremskreises übernehmen.

Das Bremssystem kann also aktive Bremsvorgänge durchführen, solange wenigstens einer der beiden Bremskreise noch intakt ist. Als nicht intakt wird ein Bremskreis bezeichnet, wenn in ihm die Steuer- und Regeleinheit und/oder die Druckbereitstellungseinheit ausgefallen ist, insbesondere wenn eine Fehlfunktion in den elektrischen Komponenten vorliegt.

Bekannte Simulatorbremssysteme besitzen meist nur eine Elektronikeinheit. Dies hat den Nachteil, dass bei nicht betriebsbereiter Elektronikeinheit in eine sogenannte hydraulische Rückfallebene mit stark reduziertem Funktionsumfang umgeschaltet werden muss. Im vorgeschlagenen Bremssystem sind den beiden Hydraulikreisen separate Elektronikeinheiten zugeordnet, die über eine Datenschnittstelle miteinander kommunizieren können.

Die beiden Bremskreise sind hydraulisch trennbar mit zwei stromlos geschlossenen Kreiszuschaltventile verbindbar, von denen ein erstes Kreiszuschaltventil von der ersten Steuer- und Regeleinheit ansteuerbar ist, und wobei ein zweites Kreiszuschaltventil von der zweiten Steuer- und Regeleinheit ansteuerbar ist. Durch das Öffnen eines Kreiszuschaltventils kann somit gezielt eine hydraulische Verbindung der beiden Kreise realisiert werden, so dass der ausgefallene Bremskreis aus dem intakten Bremskreis mit Druckmittel versorgt werden kann. Die Anordnung der beiden Kreiszuschaltventile ist derart gewählt, dass das Öffnen eines der beiden Ventile die Kreisverbindung herstellt. Dazu sind die beiden Kreiszuschaltventile bevorzugt parallel zueinander geschaltet.

Wenn eine Elektronikeinheit ausgefallen ist, hebt die noch intakte Elektronikeinheit die Zweikreisigkeit auf und bedient die Radbremsen des elektrisch ausgefallenen Bremskreises mit. Hierzu sind zwei stromlos, geschlossene an die jeweiligen Elektronikeinheiten angeschlossene, Kreisverbindungsventile vorgesehen. Somit sind auch nach Ausfall einer Elektronikeinheit alle Radbremsen mit elektronisch einstellbarem Bremsdruck beaufschlagbar.

Bekannte Simulator-Bremssysteme haben den weiteren Nachteil, dass diese im Normalbetrieb mit einer einkreisigen Hydraulik arbeiten, die eine intensive Überwachung sowie eine sehr schnelle Systemreaktion auf Fehler wie hydraulische Leckage erfordern. Das vorgeschlagene Bremssystem nutzt im Normalbetrieb eine durchgehend zweikreisige Hydraulik. Die beiden Bremskreise sind lediglich über stromlos geschlossene Elektromagnetventile miteinander verbindbar, die jedoch im Normalbetrieb niemals geöffnet werden. Durch die Zweikreisigkeit kann sich eine Leckage in einem der beiden Hydraulikkreise nicht auf den anderen auswirken, sodass in dem nicht betroffenen Hydraulikkreis keine speziellen Systemreaktionen beim Auftreten einer Leckage einzuleiten sind.

Wenigstens ein Auslassventil im zweiten Bremskreis ist von der ersten Steuer- und Regeleinheit ansteuerbar, wobei wenigstens ein Auslassventil im ersten Bremskreis von der zweiten Steuer- und Regeleinheit ansteuerbar ist. Jede der beiden Steuer- und Regeleinheiten kann also in dem jeweils anderen Bremskreis ein Auslassventil ansteuern.

Bevorzugt ist genau ein Auslassventil im zweiten Bremskreis von der ersten Steuer- und Regeleinheit ansteuerbar ist und genau ein Auslassventil im ersten Bremskreis von der zweiten Steuer- und Regeleinheit ansteuerbar. Bei einer achsweisen Aufteilung der Radbremsen auf die Bremskreise wird auf diese Weise eine achsweise ABS-Regelung nach einem Erstfehler ermöglicht. Bekannte Bremssysteme sind so ausgeführt, dass eine ABS Regelfunktion nur bei technisch einwandfreien und fehlerlosen Zustand zur Verfügung steht. Beispielsweise steht nach dem Ausfall eines elektrischen Bordnetzes oder einer Elektronikeinheit keine ABS Regelfunktion mehr zur Verfügung. Entsprechend dem Automotive Trend zur Erhöhung der Verfügbarkeit wichtiger Assistenzfunktionen wie ABS, insbesondere im Hinblick auf das Automatisierte Fahren, sind hier technische Verbesserungen erforderlich.

Die Stabilität und Lenkbarkeit des Fahrzeugs müssen bei hoher Verfügbarkeit erhalten bleiben, selbst wenn eine Elektronikeinheit nicht mehr betriebsbereit ist. Um diese neue Anforderung zu erfüllen, wird daher, wie oben beschrieben, bevorzugt eines der Auslassventile eines jeden Hydraulikkreises von der Elektronikeinheit angesteuert wird, die dem jeweils anderen Hydraulikkreises zugeordnet ist. Der funktionsmäßig verbleibenden Elektronikeinheit stehen somit zur Druckmodulation im elektrisch ausgefallenen Hydraulikkreis sowohl ein Einlass als auch ein Auslassventil zur Verfügung. Als Einlassventil dient das oben erwähnte stromlos geschlossene Kreisverbindungsventil. Dieser Aufbau ist in symmetrischer Anordnung für beide Kreise vorgesehen. Somit ist selbst bei Ausfall einer Elektronikeinheit eine achsweise ABS Regelfunktion verfügbar. Damit bleiben auch im Fall eines beliebigen elektrischen Fehlers die Stabilität und Lenkbarkeit des Fahrzeugs erhalten.

Vorteilhafterweise ist ein Pedalgefühlsimulator vorgesehen. Das Bremssystem wird dabei vorteilhaft in einer Brake-by-Wire-Betriebsart betrieben. Der Pedalgefühlsimulator ist vorzugsweise mit Hilfe eines Bremspedals betätigbar. Der Pedalgefühlsimulator dient dazu, dem Fahrer bei Betätigung des Bremspedals ein gewohntes bzw. vertrautes Pedalgefühl zu vermitteln.

Vorteilhafterweise ist das Bremspedal durch eine Koppelstange mit einem axial verfahrbaren Simulatorkolben gekoppelt, wobei zwei, insbesondere redundant ausgeführte, Wegsensoren vorgesehen sind, die jeweils den zurückgelegten Kolbenweg und/oder Pedalweg messen. Auf diese Weise kann zuverlässig der Fahrerbremswunsch ermittelt werden. Der Pedalgefühlsimulator ist in einer bevorzugten Ausführungsform trocken ausgeführt.

Bevorzugt ist ein erster der beiden Wegsensoren mit der ersten Steuer- und Regeleinheit signaleingangsseitig verbunden und ein zweiter der beiden Wegsensoren mit der zweiten Steuer- und Regeleinheit signaleingangsseitig verbunden ist. Auch bei Ausfall einer der beiden Steuer- und Regeleinheiten kann die andere Steuer- und Regeleinheit noch das Signal des mit ihr verbundenen Wegsensors auswerten und daraus den Fahrerbremswunsch bestimmen.

In einer bevorzugten Ausführungsform sind beide Druckbereitstellungseinrichtungen jeweils als Linearaktuator ausgeführt.

In einer alternativen bevorzugten Ausführungsform ist eine Druckbereitstellungseinrichtung als Linearaktuator ausgeführt und die andere Druckbereitstellungseinrichtung als Pumpe ausgebildet. In diesem Fall kann die Kreistrennung mittels zweier in Reihe geschalteter stromlos offener Kreistrennventile erfolgen.

In einer weiteren bevorzugten Ausführungsform ist jeder der beiden Druckbereitstellungseinrichtung jeweils als Pumpe ausgebildet. Hierbei erfolgt die Kreisverbindung bevorzugt wie oben beschrieben mit Hilfe von zwei parallel geschalteten, stromlos geschlossenen Kreiszuschaltventilen.

Die Variante mit der besten Funktionalität die Version des Bremssystems mit zwei Linearaktuatoren. Sie erlaubt achsweise komfortable (nahezu geräuschlos und quasi stufenlos) Druckstellung und elektrische und hydraulische Zweikreisigkeit.

Die Variante mit einem Linearaktuator und einer Pumpe würde im normalen Betrieb nur den Linearaktuator nutzen und die Pumpe würde nur ergänzend im Fehlerfall oder bei Bremsregelfunktionen wie ABS o.ä. genutzt. Diese Variante könnte eventuell preisgünstiger sein, sofern das Pumpenmodul preisgünstig ausgeführt ist und günstiger als ein Linearaktuator. Das Pumpenmodul kann auch als modulare Ergänzung dienen. Die Pumpe-Pumpe Variante wäre eine weitere Alternative.

Bevorzugt sind zwei separate Bordnetze vorgesehen, wobei jede Steuer und Regeleinheit und/oder Druckbereitstellungseinrichtung jeweils von einem der beiden Bordnetze gespeist wird.

Die hydraulische Aufteilung der Radbremsen auf die beiden Bremskreise ist bevorzugt achsweise realisiert ist. Für eine optimale Bremskraftverteilung bei Normalbremsungen und insbesondere bei Fahrzeugen, die auch rekuperativ auf einer oder beiden Achsen bremsen können, ist es vorteilhaft, eine achsweise komfortable Druckstellung durchführen zu können. Das Bremssystem sieht vorteilhafterweise zwei separate Bremskreise mit zwei separaten Druckstellern vor, die jeweils eine komfortable achsweise Druckerhöhung und Druckabsenkung ermöglichen. Durch die achsweise Bremskreisaufteilung können die Bremsdrücke auch in Fahrzeugen mit rekuperativer Normalbremsung auf einer oder beiden Achsen optimal eingestellt werden.

In einer bevorzugten Ausführungsform ist ein Hauptbremszylinder hydraulisch trennbar mit den Radbremsen verbunden. In diesem Fall kann eine hydraulischmechanische Rückfallebene bereitgestellt werden, in der der Fahrer durch Muskelkraft Druckmittel in die Radbremsen verschiebt. Bevorzugt ist in diesem Fall für die Brake-by-Wire-Betriebsart ein hydraulischer Pedalgefühlsimulator vorgesehen.

In Bezug auf das Verfahren wird die oben genannte Aufgabe erfindungsgemäß gelöst, indem bei elektrischen Ausfall eines Bremskreises in diesem ausgefallenen Bremskreis die Druckregelung durchgeführt wird durch Ansteuerung eines Kreiszuschaltventils und einem Auslassventil durch die Steuer- und Regeleinheit im intakten Bremskreis, und wobei die Druckregelung in dem elektrisch intakten Bremskreis durchgeführt wird mit Hilfe von zwei Einlassventilen und einem Auslassventil.

Vorteilhafterweise wird zum Druckaufbau im ausgefallenen Bremskreis von der intakten Druckbereitstellungseinheit im intakten Bremskreis ein Vordruck aufgebaut wird, wobei ein Kreiszuschaltventil geöffnet wird, so dass Bremsflüssigkeit in den ausgefallenen Bremskreis strömt.

Zum Druckabbau im ausgefallenen Bremskreis wird vorteilhafterweise ein Auslassventil im ausgefallenen Bremskreis von der intakten Steuer- und Regeleinheit geöffnet.

Zum Druckaufbau im intakten Bremskreis wird vorteilhafterweise Bremsflüssigkeit aus dem Druckraum der Druckbereitstellungseinrichtung durch wenigstens ein Einlassventil in eine Radbremse geleitet.

Zum Druckabbau im intakten Bremskreis wird vorteilhafterweise ein Auslassventil von der Steuer- und Regeleinheit des intakten Bremskreises angesteuert wird und wobei das Einlassventil der Radbremse geöffnet wird, welcher das intakte Auslassventil zugeordnet ist.

Bevorzugt wird zusätzlich das Einlassventil der Radbremse geöffnet, welches der Radbremse mit ausgefallenem Auslassventil zugeordnet ist.

Die Druckbereitstellungseinrichtung ist bevorzugt als Linearaktuator ausgebildet, wobei während des Druckabbaus die Aktuatorkolbenposition gehalten wird.

Die Vorteile der Erfindung liegen insbesondere darin, dass das vorgeschlagene Bremssystem für Fahrzeuge mit automatisierter Fahrfunktion besonders geeignet ist. Gegenüber bekannten Systemen bietet es sowohl eine verbesserte Normalfunktion als auch eine verbesserte Funktion nach Auftreten eines Fehlers. Das Bremssystem eignet sich insbesondere für Anwendungen im autonomen bzw. hochautomatisierten Fahren.

Das erfindungsgemäße Bremssystem ist wegen seiner Zweikreisigkeit robuster gegen möglicherweise auftretende Fehler und ist zudem so gestaltet, dass relevante Komponenten in einfacher Weise überwacht werden können. Vorteilhaft ist dass die wesentlichen Funktionen fast aller Komponenten im Normalbetrieb ohnehin genutzt werden und somit ständig getestet sind. Als im Normalbetrieb nicht genutzte Funktionen verbleibt die elektrische Aktivierung der Kreisverbindung die als nicht fehleranfällig betrachtet wird.

Ein Nachteil in bekannten Simulator Bremssystemen ist, dass die Fähigkeit des Schließens der sogenannten Druckzuschaltventile nur schlecht überwacht werden kann. Um dies zu testen, muss das Druckzuschaltventil von der dem Drucksteller abgewandten Seite mit Druck beaufschlagt werden. Dies ist in bekannten Bremssystemen nicht oder nur indirekt möglich. Im beschriebenen Bremssystem ist eine solche Druckbeaufschlagung zum Test der Druckzuschaltventile mittels des jeweils anderen Druckstellers problemlos und ohne Druckaufbau in Radbremsen oder Betätigungseinheit möglich. Zum entsprechenden Test werden die Radeinlassventile geschlossen, so dass ein hydraulisch steifer Raum entsteht, der kürzeste Testzeiten erlaubt.

Ein Ausführungsbeispiel der Erfindung wird anhand einer Zeichnung näher erläutert. Darin zeigen in stark schematisierter Darstellung:
FIG. 1 ein Bremssystem mit zwei Druckquellen in einer ersten bevorzugten Ausführungsform;
FIG. 2 ein Bremssystem mit zwei Druckquellen in einer zweiten bevorzugten Ausführungsform;
FIG. 3 ein Bremssystem mit zwei Druckquellen; und
FIG. 4 ein Bremssystem mit zwei Druckquellen in einer weiteren bevorzugten Ausführungsform.

Gleiche Teile sind in allen Figuren mit denselben Bezugszeichen versehen.

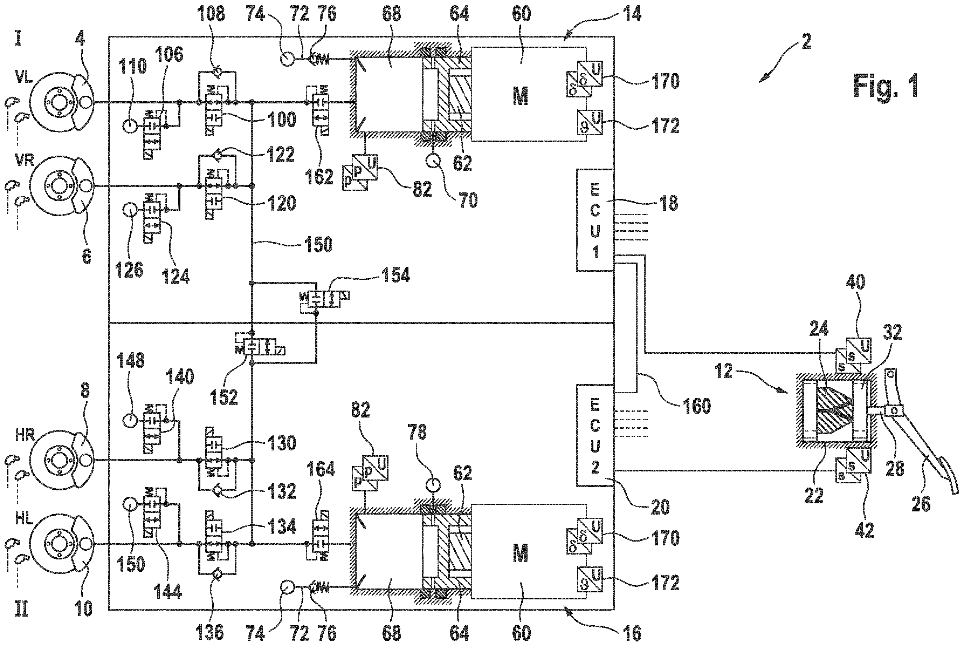

Ein in FIG. 1 dargestelltes Bremssystem 2 umfasst vier hydraulisch betätigbare Radbremsen 4, 6, 8, 10, einen Pedalgefühlsimulator bzw. Simulator 12, zwei Druckbereitstellungseinrichtungen 14, 16, zwei elektronische Steuer- und Regeleinheiten 18, 20, einen unter Atmosphärendruck stehenden Druckmittelvorratsbehälter (nicht dargestellt).

Der Simulator 12 umfasst einen Zylinder 22, in dem ein elastisches Simulatorelement 24 angeordnet. Ein Bremspedal 26 ist über eine Kolbenstange 28 mit einem Simulatorkolben 32 verbunden derart, dass eine Betätigung des Bremspedals 26 aus der Ruhelage den Simulatorkolben 32 gegen das Simulatorelement 24 drückt, wodurch der Fahrer eine Gegenkraft spürt. Auf diese Weise wird ein Pedalgefühl simuliert. Der Simulator 12 ist trocken ausgeführt, d. h. er umfasst keine Druckkammer, die mit Druckmittel befüllt ist.

Zwei, jeweils bevorzugt redundant ausgeführte, Wegsensoren 40, 42 messen jeweils den Kolbenweg des Kolbens 32 bzw. den Betätigungsweg des Bremspedals 26. Einer der beiden Wegsensoren 40 ist signaleingangsseitig mit einer Steuer- und Regeleinheit 18 verbunden. Der andere Wegsensor 42 ist signaleingangsseitig mit der anderen Steuer- und Regeleinheit 20 verbunden. Dadurch wird sichergestellt, dass bei Ausfall eines der beiden Sensoren 40, 42 oder einer der beiden Steuer- und Regeleinheiten 18, 20 der Bremswunsch des Fahrers noch ermittelt werden kann.

Beide Druckbereitstellungseinrichtungen 14, 16 sind elektrisch betätigbar und als Linearaktuatoren ausgebildet. Hierbei weisen beide Druckbereitstellungseinrichtungen 14, 16 jeweils einen Elektromotor 60 auf, dessen rotatorische Bewegung mittels eines schematisch angedeuteten Rotations-Translationsgetriebes 62 in eine translatorische Bewegung eines Druckkolbens 64 umgesetzt wird, der zum aktiven Druckaufbau in den Radbremsen 4-10 in eine hydraulische Druckkammer 68 verschoben wird. Die Druckkammern 68 sind jeweils über eine Ansaugleitung 72 über einen Behälteranschluss 74 mit dem Druckmittelvorratsbehälter 22 verbunden, wobei jeweils zwischen der Druckkammer 68 und der Ansaugleitung 72 ein Rückschlagventil 76 angeordnet ist, welches einen Fluss von Druckmittel aus dem Druckmittelvorratsbehälter 22 in die Druckkammer 68 erlaubt und in entgegengesetzter Richtung sperrt. Ein, bevorzugt redundant ausgeführter, Drucksensor misst jeweils den Druck in der Druckkammer 68.

Das Bremssystem 2 umfasst zwei Bremskreise I, II. Ein erster Bremskreis I umfasst die Radbremsen 4, 6, ein zweiter Bremskreis II umfasst die Radbremsen 8, 10. In der dargestellten bevorzugten Ausführungsform ist die Radbremse 4 die linke Vorderradbremse, Radbremse 6 ist die rechte Vorderradbremse, Radbremse 8 ist rechte Hinterradbremse, Radbremse 10 ist die linke Hinterradbremse. Die Aufteilung der Radbremsen 4-10 ist demnach "schwarz-weiß" bzw. achsweise.

In einer hydraulischen Verbindung zwischen Druckraum 68 der Druckbereitstellungseinrichtung 14 und Radbremse 4 sind ein stromlos offenes Einlassventil 100 und ein stromlos geschlossenes Auslassventil 106 angeordnet. Dem Einlassventil 100 ist ein Rückschlagventil 108 parallelgeschaltet, welches einen Fluss von Druckmittel aus Druckraum 68in Richtung Radbremse 4 blockiert und in entgegengesetzter Richtung erlaubt. Das Auslassventil ist über einen Behälteranschluss 110 mit dem Druckmittelvorratsbehälter verbunden. In gleicher Weise sind in einer hydraulischen Verbindung zwischen Druckraum 69 der Druckbereitstellungseinrichtung 14 ein Einlassventil 120 mit parallel geschaltetem Rückschlagventil 122 sowie ein Auslassventil 124 mit Behälteranschluss 126 angeordnet.

In Bremskreis II sind in gleicher Weise in eine Verbindungsleitung zwischen Druckkammer 68 der Druckbereitstellungseinrichtung 16 und der jeweiligen Radbremse jeweils ein Einlassventil 130, 134 mit parallelgeschaltetem Rückschlagventil 132, 136 sowie jeweils ein Auslassventil140, 144 mit Behälteranschluss 148, 150 angeordnet. Das Bremssystem 2 erlaubt auf diese Weise radindividuellen Bremsdruckaufbau und -abbau.

Der Druckraum 68 der Druckbereitstellungseinrichtung 14 ist durch ein stromlos geschlossenes Druckzuschaltventil 162 mit den Radbremsen 4,6 des Bremskreises I hydraulisch verbindbar. Der Druckraum 68 der Druckbereitstellungseinrichtung 16 ist durch ein stromlos geschlossenes Druckzuschaltventil 164 mit den Radbremsen 8, 10 des Bremskreises hydraulisch verbindbar.

Im unbetätigten Zustand bzw. der Ausgangslage des Kolbens 64 ist der Druckraum 68 der Druckbereitstellungseinrichtung 14 über einen Reservoiranschluss 70 mit dem Bremsmittelvorratsbehälter bzw. Reservoir verbunden. Ebenso ist in diesem Zustand der Druckraum 68 der Druckbereitstellungseinrichtung 16 über einen Reservoiranschluss 78 mit dem Bremsmittelvorratsbehälter bzw. Reservoir verbunden. An den Linearaktuatoren befinden sich demnach Schnüffellöcher mit Behälterverbindung, die in Aktuatornullposition einen Druck- und Volumenausgleich zum Behälter ermöglichen für beide Bremskreise I, II. Dies ist auch für die Radbremsen 4, 6, 8, 10 der Fall, da während des Betriebs bzw. während einer Bremsdruckstellung die Aktuatorzuschaltventile 162, 164 geöffnet sind.

Bei der Druckbereitstellungseinrichtung 14 wir die Rotorlage des Motors 60 mit Hilfe eines, bevorzugt redundant ausgeführten, Rotorlagesensors 170 gemessen. Ein optional vorhandener, bevorzugt redundant ausgeführter Sensor 172 misst die Temperatur der Motorwicklung. Bei der Druckbereitstellungseinrichtung 16 wir die Rotorlage des Motors 60 mit Hilfe eines, bevorzugt redundant ausgeführten, Rotorlagesensors 170 gemessen. Ein optional vorhandener, bevorzugt redundant ausgeführter Sensor 172 misst die Temperatur der Motorwicklung.

Die Bremskreise I und II sind hydraulisch trennbar miteinander verbunden. Dazu ist in einer hydraulischen Verbindungsleitung 150 ein stromlos geschlossenes Kreisverbindungsventil 152 angeordnet, zu dem ein weiteres stromlos geschlossenes Kreisverbindungsventil 154 parallelgeschaltet ist.

In dem dargestellten Bremssystem 2 sind den beiden Hydraulikkreisen bzw. Bremskreisen I, II die zwei separaten Steuer- und Regeleinheiten 18, 20 bzw. Elektronikeinheiten zugeordnet. Die beiden Steuer- und Regeleinheiten 18, 20 können über eine Datenschnittstelle 160 miteinander kommunizieren. Wenn eine Elektronikeinheit ausgefallen ist, hebt die noch intakte Elektronikeinheit die Zweikreisigkeit auf und bedient die Radbremsen des elektrisch ausgefallenen Bremskreises I, II mit. Sie öffnet dazu ein Kreisverbindungsventil 154, 152 und bedient die Radbremsen 4,6; 8, 10 des elektronisch ausgefallenen Bremskreises I, II mit.

In jedem der beiden Bremskreise I, II kann eines der beiden Auslassventile 106, 124, 140, 144 von der Steuer- und Regeleinheit 18, 20 des jeweils anderen Bremskreises I, II angesteuert werden. Beispielhaft wird das Auslassventil 106 von der Steuer- und Regeleinheit 20 angesteuert und das Auslassventil 140 wird von der Steuer- und Regeleinheit 18 angesteuert. Somit sind nach Ausfall einer der beiden Elektronikeinheiten alle Radbremsen 4-10 mit elektronisch einstellbarem Bremsdruck beaufschlagbar.

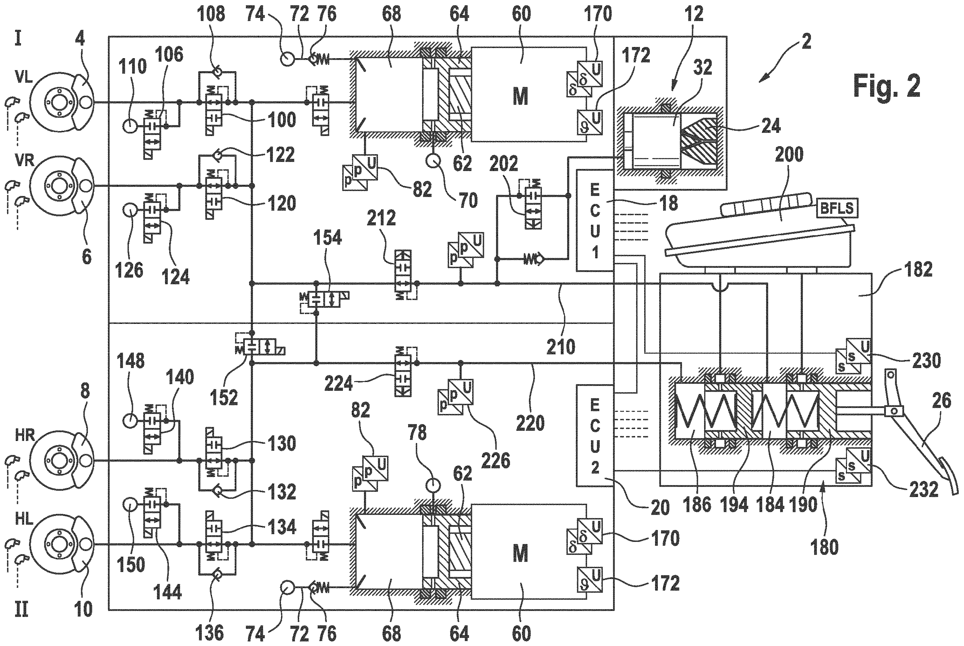

Das in FIG. 1 gezeigte Bremssystem 2 ist besonders geeignet für Fahrzeuge mit voller Automatisierung der Fahrfunktion (Level 4 oder 5). Für Fahrzeuge ohne Bremspedal können das dargestellte Bremspedal 26 und/oder der Simulator 12 entfallen. Bekannte Simulator-Bremssysteme haben den Nachteil, dass während eines Nachsaugvorgangs zum Wiederbefüllen einer Linearaktuatordruckkammer kein Systemdruck bereitgestellt werden kann. Eine Erhöhung von Radbremsdrücken ist in dieser Phase daher nicht möglich. In den in den FIG. 1 und 2 dargestellten Bremssystemen wird der Systemdruck unterbrechungsfrei bereitgestellt. Wenn ein Nachsaugen für einen Linearaktuator erforderlich ist, wird dessen Druckzuschaltventil 162, 164 geschlossen und die Kreisverbindung durch Öffnen von mindestens einem Kreisverbindungsventil 152, 154 hergestellt. Somit kann in dieser Zeit der jeweils andere Linearaktuator den Systemdruck für alle Radbremsen 4, 6, 8, 10 bereitstellen. Über die Datenschnittstelle 160 wird der Zustand der beiden ECUs und deren angeschlossenen Aktuatoren ausgetauscht. Außerdem werden Informationen zu Bremsregelfunktionen und angeforderten Bremsvorgaben von Bremspedal, Autopilot oder sonstigen Fahrzeugsystemen ausgetauscht und abgestimmt.

Die FIG. 2 zeigt eine bevorzugte Variante eines Bremssystems mit einem hydraulisch angebundenen Tandemhauptbremszylinder (THZ) 180, der von dem Bremspedal 26 betätigbar ist. Der Tandemhauptbremszylinder 180 umfasst zwei in einem Gehäuse 182 angeordnete Druckkammern 184, 186, nämlich die Primärdruckkammer 184 und die Sekundärdruckkammer 186. Die Primärdruckkammer 184 wird von einem mit Hilfe des Bremspedals 26 betätigbaren Primärkolben 190 begrenzt und die Sekundärkammer 186 wird von einem schwimmend ausgebildeten Sekundärkolben 194 begrenzt. Im unbetätigten Zustand des Primärkolbens 190 ist die Primärdruckkammer 184 mit einem Bremsmittelvorratsbehälter 200 verbunden. Im unbetätigten Zustand des Sekundärkolbens 194 ist die Sekundärdruckkammer 18 Bremsmittelvorratsbehälter 200 verbunden.

Der Simulator 12 ist im vorliegenden Ausführungsbeispiel hydraulisch ausgeführt. Er ist durch ein Simulatorventil 202 hydraulisch mit der Primärdruckkammer 184 verbindbar. Im By-Wire-Betrieb wird die hydraulische Anbindung des Tandemhauptbremszylinders 180 an die Radbremsen 4, 6, 8, 10 abgesperrt und eine hydraulische Verbindung zu dem Simulator 12 wird hergestellt. Wenn beide Elektronikeinheiten bzw. Steuer- und Regeleinheiten inaktiv sind, kann der Fahrer die Radbremsen 4, 6, 8, 10 direkt hydraulisch betätigen.

Die Primärdruckkammer 184 ist durch eine Primärleitung 210 mit dem Bremskreis I verbindbar und durch ein stromlos offenes Trennventil 212 im By-Wire-Modus absperrbar. Ein bevorzugt redundant ausgebildeter Drucksensor 216 misst den Druck in der Primärdruckkammer 184. Die Sekundärdruckkammer 186 ist durch eine Sekundärleitung 220 mit dem Bremskreis I verbindbar und durch ein stromlos offenes Trennventil 224 im By-Wire-Modus absperrbar. Ein bevorzugt redundant ausgebildeter Drucksensor 226 misst den Druck in der Sekundärdruckkammer 186.

Zur Fahrerbremswunscherfassung sind, bevorzugt redundant ausgebildete, Wegsensoren 230, 232 vorgesehen zur Messung des Pedalwegs und oder des Weges des Primärkolbens 190. Dabei ist jeder der beiden Sensoren 230, 232 signaleingangsseitig mit einer anderen Steuer- und Regeleinheit 18, 20 verbunden. Diese Ausführungsform des Bremssystems 2 ist insbesondere auch für Fahrzeuge erforderlich, die keine redundante Energieversorgung für die beiden ECUs und Drucksteller bereitstellen, da hier durch das Auftreten eines Fehlers, nämlich dem Ausfall der Energieversorgung, nur noch eine hydraulische Betätigung durch den Fahrer möglich ist.

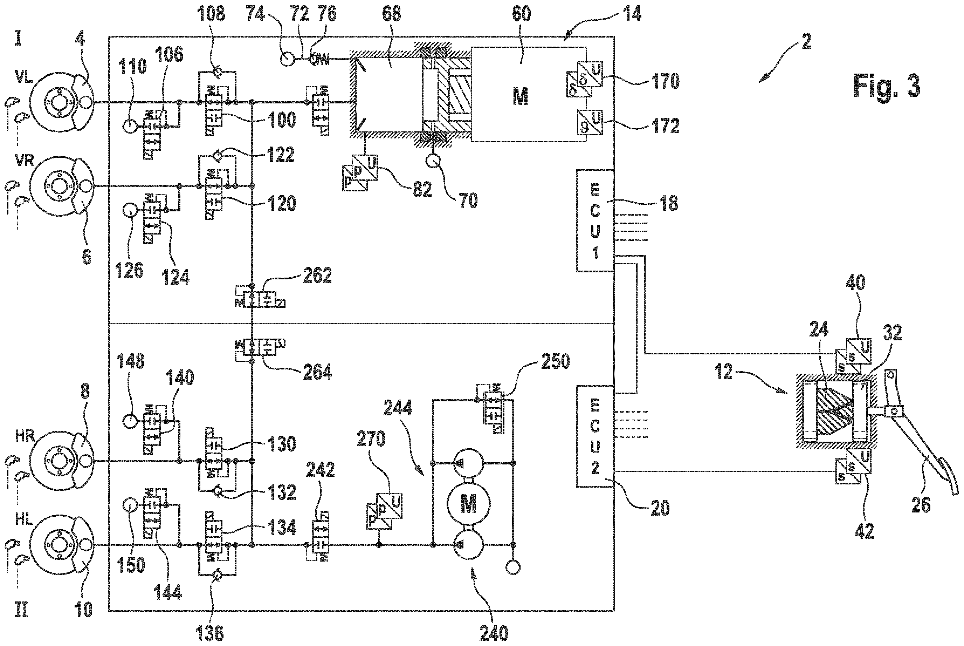

Die FIG. 3 zeigt eine bevorzugte Ausführungsform des Bremssystems 2 mit asymmetrischer Druckstellerkonfiguration. Hierbei ist ein Drucksteller bzw. eine Druckbereitstellungseinrichtung 14 als Linearaktuator und eine Druckbereitstellungseinrichtung 240 als Kombination einer elektromotorisch angetriebenen Pumpe 244 und eines Druckregelventils 250 ausgeführt. Der pumpendruckseitig bereitgestellte Druck wird mittels eines, bevorzugt redundant ausgeführten, Drucksensors 270 gemessen. Weiterhin ist ein Zuschaltventil 242 vorgesehen.

In dem in Fig. 3 dargestellten Bremssystem ist die Kreistrennung der Bremskreise I, II durch in Reihe geschaltete stromlos offene Elektromagnetventile bzw. Kreistrennventile 262, 264 realisiert. Im Normalbetrieb bleiben diese geöffnet und der Linearaktuator stellt den Systemdruck für alle Radbremsen 4, 6, 8, 10 bereit. Während in den Varianten in FIG. 1 und 2 die Kreistrennung im Normalbetrieb vorhanden ist, kann sie hier durch Schließen eines der beiden Kreistrennventile 262, 264 hergestellt werden, um die oben beschriebenen vorteilhaften Funktionalitäten zu erhalten.

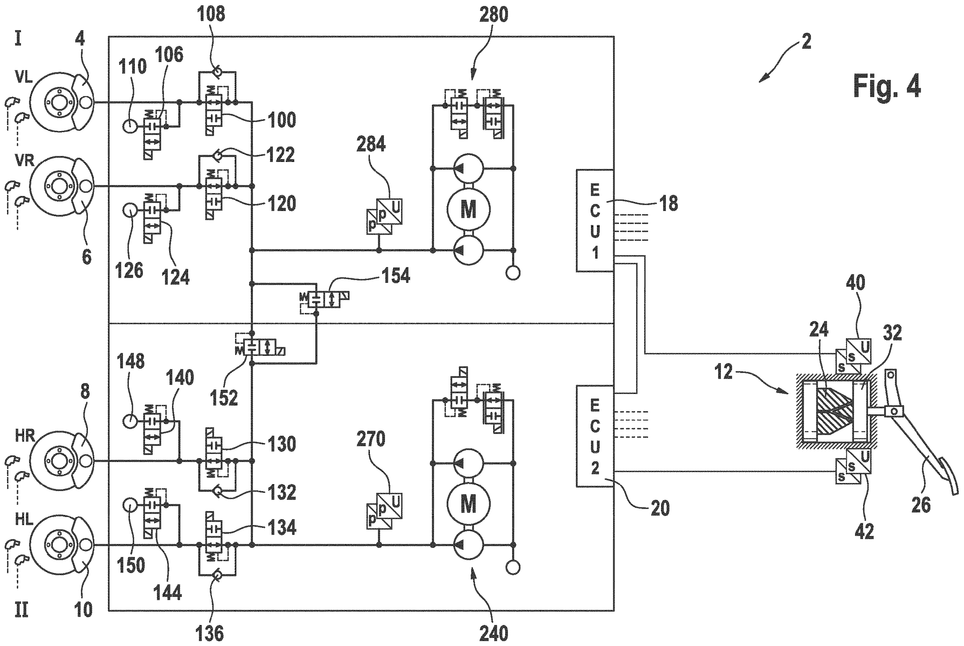

Die FIG. 4 zeigt eine bevorzugte Ausführungsform des Bremssystems 2 analog zu FIG. 1, jedoch mit Druckbereitstellung mittels zweier Pumpen 240, 280. Bei dieser Variante sind beide Druckbereitstellungseinrichtungen als Pumpen 240, 280 ausgebildet. Die Kreistrennung erfolgt wie in FIG. 1 dargestellt, mittels zweier parallel geschalteter, stromlos geschlossener, Kreiszuschaltventile 152, 154.

## Patentansprüche

1. Bremssystem (2), umfassend vier hydraulisch betätigbare Radbremsen (4, 6, 8, 10), wobei jeder Radbremse (4, 6, 8, 10) jeweils ein stromlos offenes Einlassventil (100, 120, 130, 134) zugeordnet ist, wobei zwei Druckbereitstellungseinrichtungen (14, 16) zum aktiven Druckaufbau in den Radbremsen (4, 6, 8, 10) vorgesehen sind, wobei eine erste (18) und eine zweite Steuer- und Regeleinheit (20) vorgesehen sind, wobei ein erster (I) und ein zweiter Bremskreis (II) hydraulisch mit jeweils zwei Radbremsen (4, 6; 8, 10) ausgebildet sind, wobei in jedem Bremskreis (I, II) jeweils eine Druckbereitstellungseinrichtung (14, 16) mit zwei Radbremsen (4, 6; 8, 10) hydraulisch verbunden ist, wobei die erste Steuer- und Regeleinheit (18) die Druckbereitstellungseinrichtung (14) des ersten Bremskreises (I) elektrisch ansteuert und wobei die zweite Steuer- und Regeleinheit (20) die Druckbereitstellungseinrichtung (16) des zweiten Bremskreises (II) elektrisch ansteuert,
**dadurch gekennzeichnet, dass**
jeder Radbremse (4, 6, 8, 10) jeweils ein stromlos geschlossenes Auslassventil (106, 124, 140, 144) zugeordnet ist, dass die beiden Steuer- und Regeleinheiten (18, 20) über eine Datenschnittstelle (160) miteinander verbunden sind und dass die beiden Bremskreise (I, II) hydraulisch trennbar mit zwei stromlos geschlossenen Kreiszuschaltventilen (152, 154) verbindbar sind, von denen ein erstes Kreiszuschaltventil (152) von der ersten Steuer- und Regeleinheit ansteuerbar ist, und wobei ein zweites Kreiszuschaltventil (154) von der zweiten Steuer- und Regeleinheit (20) ansteuerbar ist, wobei wenigstens ein Auslassventil (140, 144) im zweiten Bremskreis (II) von der ersten Steuer- und Regeleinheit (18) ansteuerbar ist und wobei wenigstens ein Auslassventil (106, 124) im ersten Bremskreis (I) von der zweiten Steuer- und Regeleinheit (20) ansteuerbar ist.

2. Bremssystem (2) nach Anspruch 1, wobei genau ein Auslassventil (140, 144) im zweiten Bremskreis (II) von der ersten Steuer- und Regeleinheit (18) ansteuerbar ist und wobei genau ein Auslassventil (106, 124) im ersten Bremskreis (I) von der zweiten Steuer- und Regeleinheit (20) ansteuerbar ist.

3. Bremssystem (2) nach Anspruch 1 oder 2, wobei ein Pedalgefühlsimulator (12) vorgesehen ist.

4. Bremssystem (2) nach Anspruch 3, wobei der Pedalgefühlsimulator (12) mit Hilfe eines Bremspedals (26) betätigbar ist.

5. Bremssystem (2) nach Anspruch 4, wobei das Bremspedal (26) durch eine Koppelstange (28) mit einem axial verfahrbaren Simulatorkolben (32) gekoppelt, und wobei zwei, insbesondere redundant ausgeführte, Wegsensoren (40, 42) vorgesehen sind, die jeweils den zurückgelegten Kolbenweg und/oder Pedalweg messen.

6. Bremssystem (2) nach Anspruch 5, wobei ein erster (40) der beiden Wegsensoren mit der ersten Steuer- und Regeleinheit (18) signaleingangsseitig verbunden ist und wobei ein zweiter (42) der beiden Wegsensoren mit der zweiten Steuer- und Regeleinheit (20) signaleingangsseitig verbunden ist.

7. Bremssystem (2) nach einem der Ansprüche 1 bis 6, wobei beide Druckbereitstellungseinrichtungen (14, 16) jeweils als Linearaktuator ausgeführt sind.

8. Bremssystem (2) nach einem der Ansprüche 1 bis 6, wobei eine Druckbereitstellungseinrichtung (14) als Linearaktuator ausgeführt ist und wobei die andere Druckbereitstellungseinrichtung als Pumpe ausgebildet ist.

9. Bremssystem (2) nach einem der Ansprüche 1 bis 8, wobei zwei separate Bordnetze vorgesehen sind, und wobei jede Druckbereitstellungseinrichtung (14, 16) jeweils von einem der beiden Bordnetze gespeist wird.

10. Bremssystem (2) nach einem der Ansprüche 1 bis 9, wobei die hydraulische Aufteilung der Radbremsen (4, 6, 8, 10) auf die beiden Bremskreise (I, II) achsweise realisiert ist.

11. Bremssystem (2) nach einem der Ansprüche 1 bis 10, wobei ein Hauptbremszylinder hydraulisch trennbar mit den Radbremsen (4, 6, 8, 10) verbunden ist.

12. Bremssystem (2) nach einem der Ansprüche 1 bis 11, wobei die zwei Kreiszuschaltventile (152, 154) parallel zueinander geschaltet sind.

13. Verfahren zum Betreiben eines Bremssystems (2) nach einem der Ansprüche 1 bis 12, wobei bei elektrischen Ausfall eines Bremskreises (I, II) in diesem ausgefallenen Bremskreis (I, II) die Druckregelung durchgeführt wird durch Ansteuerung eines Kreiszuschaltventils (152, 154) und eines Auslassventils (106, 124, 140, 144) durch die Steuer- und Regeleinheit (18, 20) im intakten Bremskreis (I, II), und wobei die Druckregelung in dem elektrisch intakten Bremskreis (II, I) durchgeführt wird mit Hilfe von zwei Einlassventilen (100, 120, 130, 134) und einem Auslassventil (106, 124, 140, 144).

14. Verfahren nach Anspruch 13, wobei zum Druckaufbau im ausgefallenen Bremskreis (I, II) von der intakten Druckbereitstellungseinheit (14, 16) im intakten Bremskreis (I, II) ein Vordruck aufgebaut wird, wobei ein Kreiszuschaltventil geöffnet wird (152, 154), so dass Bremsflüssigkeit in den ausgefallenen Bremskreis (I, II) strömt.

15. Verfahren nach Anspruch 13 oder 14, wobei zum Druckabbau im ausgefallenen Bremskreis (I, II) ein Auslassventil (106, 124, 140, 144) im ausgefallenen Bremskreis (I; II) von der intakten Steuer- und Regeleinheit (18, 20) geöffnet wird.

16. Verfahren nach einem der Ansprüche 13 bis 15, wobei zum Druckaufbau im intakten Bremskreis (I, II) Bremsflüssigkeit aus dem Druckraum (68) der Druckbereitstellungseinrichtung (14, 16) durch wenigstens ein Einlassventil (100, 120, 130, 134) in eine Radbremse (4, 6, 8, 10) geleitet wird.

17. Verfahren nach einem der Ansprüche 13 bis 16, wobei zum Druckabbau im intakten Bremskreis (I, II) ein Auslassventil (106, 124, 140, 144) von der Steuer- und Regeleinheit (18, 20) des intakten Bremskreises (I, II) angesteuert wird und wobei das Einlassventil (100, 120, 130, 134) der Radbremse (4, 6, 8, 10) geöffnet wird, welcher das von der Steuer- und Regeleinheit (18, 20) des intakten Bremskreises (I, II) angesteuerte Auslassventil (106, 124, 140, 144) zugeordnet ist.

18. Verfahren nach Anspruch 17, wobei zusätzlich das Einlassventil (100, 120, 130, 134) der Radbremse (4, 6, 8, 10) geöffnet wird, welches der Radbremse (4, 6, 8, 10) mit dem von der Steuer- und Regeleinheit (18, 20) des ausgefallenen Bremskreises (I, II) angesteuerten Auslassventil (106, 124, 140, 144) zugeordnet ist.

19. Verfahren nach Anspruch 17 oder 18, wobei die Druckbereitstellungseinrichtung (14, 16) als Linearaktuator ausgebildet ist und wobei während des Druckabbaus die Aktuatorkolbenposition gehalten wird.

## Claims

1. Braking system (2) comprising four hydraulically actuatable wheel brakes (4, 6, 8, 10), wherein a normally open inlet valve (100, 120, 130, 134) is respectively assigned to each wheel brake (4, 6, 8, 10), wherein two pressure supply devices (14, 16) are provided for active pressure build-up in the wheel brakes (4, 6, 8, 10), wherein a first (18) and a second control and regulating unit (20) are provided, wherein a first (I) and a second brake circuit (II) are hydraulically configured with two wheel brakes (4, 6; 8, 10) respectively, wherein in each brake circuit (I, II) a respective pressure supply device (14, 16) is hydraulically connected to two wheel brakes (4, 6; 8, 10), wherein the first control and regulating unit (18) electrically controls the pressure supply device (14) of the first brake circuit (I), and wherein the second control and regulating unit (20) electrically controls the pressure supply device (16) of the second brake circuit (II),
**characterized in that**
a normally closed outlet valve (106, 124, 140, 144) is respectively assigned to each wheel brake (4, 6, 8, 10), **in that** the two control and regulating units (18, 20) are connected together via a data interface (160), and **in that** the two brake circuits (I, II) can be connected in hydraulically isolatable fashion to two normally closed circuit switch-on valves (152, 154), of which a first circuit switch-on valve (152) can be controlled by the first control and regulating unit, and wherein a second circuit switch-on valve (154) can be controlled by the second control and regulating unit (20), wherein at least one outlet valve (140, 144) in the second brake circuit (II) can be controlled by the first control and regulating unit (18), and wherein at least one outlet valve (106, 124) in the first brake circuit (I) can be controlled by the second control and regulating unit (20).

2. Braking system (2) according to Claim 1, wherein precisely one outlet valve (140, 144) in the second brake circuit (II) can be controlled by the first control and regulating unit (18), and wherein precisely one outlet valve (106, 124) in the first brake circuit (I) can be controlled by the second control and regulating unit (20).

3. Braking system (2) according to Claim 1 or 2, wherein a pedal feel simulator (12) is provided.

4. Braking system (2) according to Claim 3, wherein the pedal feel simulator (12) can be actuated by means of a brake pedal (26).

5. Braking system (2) according to Claim 4, wherein the brake pedal (26) is coupled by means of a coupling rod (28) to an axially movable simulator piston (32), and wherein two, in particular redundantly designed, travel sensors (40, 42) are provided which measure the covered piston travel and/or pedal travel respectively.

6. Braking system (2) according to Claim 5, wherein a first (40) of the two travel sensors is connected to the first control and regulating unit (18) on the signal input side, and wherein a second (42) of the two travel sensors is connected to the second control and regulating unit (20) on the signal input side.

7. Braking system (2) according to any of Claims 1 to 6, wherein the two pressure supply devices (14, 16) are respectively configured as linear actuators.

8. Braking system (2) according to any of Claims 1 to 6, wherein one pressure supply device (14) is configured as a linear actuator, and wherein the other pressure supply device is formed as a pump.

9. Braking system (2) according to any of Claims 1 to 8, wherein two separate on-board networks are provided, and wherein each pressure supply device (14, 16) is powered by a respective one of the two on-board networks.

10. Braking system (2) according to any of Claims 1 to 9, wherein the wheel brakes (4, 6, 8, 10) are hydraulically divided between the two brake circuits (I, II) by axle.

11. Braking system (2) according to any of Claims 1 to 10, wherein a master brake cylinder is connected to the wheel brakes (4, 6, 8, 10) in hydraulically isolatable fashion.

12. Braking system (2) according to any of Claims 1 to 11, wherein the two circuit switch-on valves (152, 154) are connected parallel to each other.

13. Method for operating a braking system (2) according to any of Claims 1 to 12, wherein on electrical failure of one brake circuit (I, II), in said failed brake circuit (I, II) the pressure is controlled by actuation of a circuit switch-on valve (152, 154) and an outlet valve (106, 124, 140, 144) by the control and regulating unit (18, 20) in the intact brake circuit (I, II), and wherein the pressure in the electrically intact brake circuit (II, I) is controlled by means of two inlet valves (100, 120, 130, 134) and one outlet valve (106, 124, 140, 144).

14. Method according to Claim 13, wherein to build up pressure in the failed brake circuit (I, II), a pre-pressure is built up by the intact pressure supply unit (14, 16) in the intact brake circuit (I, II), wherein a circuit switch-on valve (152, 154) is opened so that brake fluid flows into the failed brake circuit (I, II).

15. Method according to Claim 13 or 14, wherein to dissipate pressure in the failed brake circuit (I, II), an outlet valve (106, 124, 140, 144) in the failed brake circuit (I; II) is opened by the intact control and regulating unit (18, 20).

16. Method according to any of Claims 13 to 15, wherein to build up pressure in the intact brake circuit (I, II), brake fluid from the pressure chamber (68) of the pressure supply device (14, 16) is conducted through at least one inlet valve (100, 120, 130, 134) into a wheel brake (4, 6, 8, 10).

17. Method according to any of Claims 13 to 16, wherein to dissipate pressure in the intact brake circuit (I, II), an outlet valve (106, 124, 140, 144) is actuated by the control and regulating unit (18, 20) of the intact brake circuit (I, II), and wherein the inlet valve (100, 120, 130, 134) of the wheel brake (4, 6, 8, 10) is opened, to which the outlet valve (106, 124, 140, 144) controlled by the control and regulating unit (18, 20) of the intact brake circuit (I, II) is assigned.

18. Method according to Claim 17, wherein in addition, the inlet valve (100, 120, 130, 134) of the wheel brake (4, 6, 8, 10) is opened which is assigned to the wheel brake (4, 6, 8, 10) with the outlet valve (106, 124, 140, 144) controlled by the control and regulating unit (18, 20) of the failed brake circuit (I, II).

19. Method according to Claim 17 or 18, wherein the pressure supply device (14, 16) is configured as a linear actuator and wherein the actuator piston position is maintained during pressure dissipation.

## Revendications

1. Système de freinage (2), comprenant quatre freins de roue (4, 6, 8, 10) actionnables hydrauliquement, une soupape d'admission (100, 120, 130, 134) ouverte sans courant étant associée à chaque frein de roue (4, 6, 8, 10), deux dispositifs de mise en pression (14, 16) étant prévus pour l'établissement actif de la pression dans les freins de roue (4, 6, 8, 10), une première (18) et une deuxième unité de commande et de régulation (20) étant prévues, un premier (I) et un deuxième circuit de freinage (II) étant réalisés hydrauliquement avec chacun deux freins de roue (4, 6 ; 8, 10), un dispositif de mise en pression (14, 16) étant relié hydrauliquement à deux freins de roue (4, 6 ; 8, 10) dans chaque circuit de freinage (I, II), la première unité de commande et de régulation (18) commandant électriquement le dispositif de mise en pression (14) du premier circuit de freinage (I) et la deuxième unité de commande et de régulation (20) commandant électriquement le dispositif de mise en pression (16) du deuxième circuit de freinage (II),
**caractérisé en ce que**
à chaque frein de roue (4, 6, 8, 10) est associée respectivement une soupape d'échappement (106, 124, 140, 144) fermée sans courant, **en ce que** les deux unités de commande et de régulation (18, 20) sont reliées l'une à l'autre par l'intermédiaire d'une interface de données (160) et **en ce que** les deux circuits de freinage (I, II) peuvent être reliés de manière hydrauliquement séparable à deux soupapes de connexion de circuit (152, 154) fermées sans courant, dont une première soupape de connexion de circuit (152) peut être commandée par la première unité de commande et de régulation, et une deuxième soupape de connexion de circuit (154) pouvant être commandée par la deuxième unité de commande et de régulation (20), au moins une soupape d'échappement (140, 144) dans le deuxième circuit de freinage (II) pouvant être commandée par la première unité de commande et de régulation (18) et au moins une soupape d'échappement (106, 124) dans le premier circuit de freinage (I) pouvant être commandée par la deuxième unité de commande et de régulation (20).

2. Système de freinage (2) selon la revendication 1, dans lequel exactement une soupape d'échappement (140, 144) dans le deuxième circuit de freinage (II) peut être commandée par la première unité de commande et de régulation (18) et dans lequel exactement une soupape d'échappement (106, 124) dans le premier circuit de freinage (I) peut être commandée par la deuxième unité de commande et de régulation (20).

3. Système de freinage (2) selon la revendication 1 ou 2, dans lequel un simulateur de sensation de pédale (12) est prévu.

4. Système de freinage (2) selon la revendication 3, dans lequel le simulateur de sensation de pédale (12) peut être actionné à l'aide d'une pédale de frein (26).

5. Système de freinage (2) selon la revendication 4, dans lequel la pédale de frein (26) est couplée par une tige de couplage (28) à un piston de simulateur (32) déplaçable axialement, et dans lequel il est prévu deux capteurs de course (40, 42), réalisés notamment de manière redondante, qui mesurent chacun la course de piston et/ou la course de pédale parcourue.

6. Système de freinage (2) selon la revendication 5, dans lequel un premier (40) des deux capteurs de course est relié côté entrée de signal à la première unité de commande et de régulation (18) et dans lequel un deuxième (42) des deux capteurs de course est relié côté entrée de signal à la deuxième unité de commande et de régulation (20).

7. Système de freinage (2) selon l'une quelconque des revendications 1 à 6, dans lequel les deux dispositifs de mise en pression (14, 16) sont chacun réalisés sous forme d'actionneur linéaire.

8. Système de freinage (2) selon l'une quelconque des revendications 1 à 6, dans lequel un dispositif de mise en pression (14) est réalisé sous forme d'actionneur linéaire et dans lequel l'autre dispositif de mise en pression est configuré sous forme de pompe.

9. Système de freinage (2) selon l'une quelconque des revendications 1 à 8, dans lequel il est prévu deux réseaux de bord séparés, et dans lequel chaque dispositif de mise en pression (14, 16) est alimenté respectivement par l'un des deux réseaux de bord.

10. Système de freinage (2) selon l'une quelconque des revendications 1 à 9, dans lequel la répartition hydraulique des freins de roue (4, 6, 8, 10) sur les deux circuits de freinage (I, II) est réalisée essieu par essieu.

11. Système de freinage (2) selon l'une quelconque des revendications 1 à 10, dans lequel un maître-cylindre de frein est relié de manière hydrauliquement séparable aux freins de roue (4, 6, 8, 10).

12. Système de freinage (2) selon l'une quelconque des revendications 1 à 11, dans lequel les deux soupapes de connexion de circuit (152, 154) sont connectées en parallèle.

13. Procédé d'exploitation d'un système de freinage (2) selon l'une quelconque des revendications 1 à 12, dans lequel, en cas de défaillance électrique d'un circuit de freinage (I, II), la régulation de pression est effectuée dans ce circuit de freinage défaillant (I, II) par commande d'une soupape de connexion de circuit (152, 154) et d'une soupape d'échappement (106, 124, 140, 144) par l'unité de commande et de régulation (18, 20) dans le circuit de freinage intact (I, II), et dans lequel la régulation de pression dans le circuit de freinage électriquement intact (II, I) est effectuée à l'aide de deux soupapes d'admission (100, 120, 130, 134) et d'une soupape d'échappement (106, 124, 140, 144).

14. Procédé selon la revendication 13, dans lequel, pour établir la pression dans le circuit de freinage (I, II) défaillant, une pression préliminaire est établie dans le circuit de freinage (I, II) intact par l'unité de mise en pression (14, 16) intacte, une soupape de connexion de circuit étant ouverte (152, 154), de telle sorte que du liquide de frein s'écoule dans le circuit de freinage (I, II) défaillant.

15. Procédé selon la revendication 13 ou 14, dans lequel, pour réduire la pression dans le circuit de freinage (I, II) défaillant, une soupape d'échappement (106, 124, 140, 144) dans le circuit de freinage (I ; II) défaillant est ouverte par l'unité de commande et de régulation (18, 20) intacte.

16. Procédé selon l'une quelconque des revendications 13 à 15, dans lequel, pour établir la pression dans le circuit de freinage intact (I, II), on fait passer du liquide de frein de la chambre de pression (68) du dispositif de mise en pression (14, 16) à travers au moins une soupape d'admission (100, 120, 130, 134) dans un frein de roue (4, 6, 8, 10).

17. Procédé selon l'une quelconque des revendications 13 à 16, dans lequel, pour réduire la pression dans le circuit de freinage intact (I, II), une soupape d'échappement (106, 124, 140, 144) est commandée par l'unité de commande et de régulation (18, 20) du circuit de freinage intact (I, II) et dans lequel la soupape d'admission (100, 120, 130, 134) du frein de roue (4, 6, 8, 10) est ouverte, à laquelle est associée la soupape d'échappement (106, 124, 140, 144) commandée par l'unité de commande et de régulation (18, 20) du circuit de freinage intact (I, II)^{.}

18. Procédé selon la revendication 17, dans lequel on ouvre en outre la soupape d'admission (100, 120, 130, 134) du frein de roue (4, 6, 8, 10) qui est associée au frein de roue (4, 6, 8, 10) avec la soupape d'échappement (106, 124, 140, 144) commandée par l'unité de commande et de régulation (18, 20) du circuit de freinage (I, II) défaillant.

19. Procédé selon la revendication 17 ou 18, dans lequel le dispositif de mise en pression (14, 16) est configuré sous forme d'actionneur linéaire et dans lequel la position du piston de l'actionneur est maintenue pendant la réduction de la pression.
